# EUROPÄISCHE PATENTSCHRIFT

(11) **EP 2 443 019 B1**
(45) Veröffentlichungstag und Bekanntmachung des Hinweises auf die Patenterteilung: **09.01.2013**
(21) Anmeldenummer: 10725976.4
(22) Anmeldetag: 22.05.2010
(51) Int. Cl.: B62D 17/00, B62D 7/14, B60G 3/01, B62D 7/15, B60G 15/06

(54) **RADAUFHÄNGUNG FÜR DIE HINTEREN RÄDER VON KRAFTFAHRZEUGEN**
WHEEL SUSPENSION FOR THE REAR WHEELS OF MOTOR VEHICLES
ELEMENT SUSPENSION DE ROUE POUR LES ROUES ARRIERE DE VEHICULES A MOTEUR

(30) Priorität: 17.06.2009 DE 102009025227
(43) Veröffentlichungstag der Anmeldung: 25.04.2012
(73) Patentinhaber: Audi AG, 85045 Ingolstadt (DE)
(72) Erfinder: MICHEL, Wilfried, 93339 Riedenburg (DE); MÜLLER, Hugo, 86701 Rohrenfels-Ballersdorf (DE); MEITINGER, Karl-Heinz, 81667 München (DE); KOSSIRA, Christoph, 85053 Ingolstadt (DE); SCHMID, Wolfgang, 85354 Freising (DE)
(74) Vertreter: Asch, Konrad
(86) Internationale Anmeldenummer: PCT/EP2010/003155
(87) Internationale Veröffentlichungsnummer: WO 2010/145746

(56) Entgegenhaltungen:
- WO-A1-98/16418
- WO-A1-2005/000606
- DE-A1- 3 743 203
- DE-A1-102008 011 367
- US-A1- 2002 036 385
- US-A1- 2008 100 021

## Beschreibung

Die Erfindung betrifft eine Radaufhängung für die hinteren Räder von Kraftfahrzeuge gemäß dem Oberbegriff des Patentanspruches 1.

Die Fahrdynamik moderner Kraftfahrzeuge wird zumeist auch durch Radaufhängungen der hinteren Räder beeinflusst, deren Lenker als Radführungselemente durch deren räumliche Lage und durch die Elastizität der Lenkerlager gezielte Fahreigenschaften ergeben, zum Beispiel einer gezielten Untersteuertendenz, etc.

Bei der technischen Realisierung einer solchen Hinterachslenkung eines (Straßen-)Fahrzeuges gibt es verschiedene technische Lösungen. In der Regel wird die Spurstange geschoben, oder aber auch in ihrer Länge verändert. Weiterhin gibt es Ausführungen mit geteiltem Radträger, wie bespielsweise in der US 20020036385, der WO 199816418 oder in der FR 2884795 beschrieben. Ein derart geteilter Radträger ist in ein Trägerteil, ein Führungsteil und einem dazwischengeschalteten Stellglied unterteilt, das zwei zueinander und gegenüber dem Führungs- oder Trägerteil drehbare Drehteile aufweist. Durch elektrische Stellmotoren ist das Trägerteil zur Spur- und/oder Sturzverstellung relativ zum Führungsteil verstellbar. Radaufhängungen mit oder ohne der genannten Verstellvorrichtung sind aber in deren Konstruktion und Ausführung relativ kompliziert und aufwendig.

Bei den bekannten Hinterachslenkungen bedarf es stets einer Radführung in klassischer Bauart, bei der als Ausgangsbasis ein Achsprinzip der herkömmlichen Konstruktion dient. Soll gelenkt werden, wird der Achse die Lenkfunktion durch geeignete Maßnahmen hinzugefügt. So kann zum Beispiel die Spurstange und/oder ein Lenker geschoben, oder aber auch in der Länge geändert werden. Weiterhin sind die bereits erwähnten geteilten Radträger bekannt, welche entsprechend geschwenkt werden können. Der große Nachteil besteht nun darin, dass die Achskonstruktion insgesamt betrachtet, selbst ohne die Möglichkeit des Lenkens an sich schon sehr aufwendig ist. Wird Lenkbarkeit gefordert, so steigt der Aufwand, Komplexität und Kosten noch weiter an.

Aufgabe der Erfindung ist es, eine Radaufhängung der gattungsgemäßen Art vorzuschlagen, die unter Vermeidung komplexer Lenker und Lenkerlager und bei einer baulich einfachen Konstruktion nahezu beliebig steuerbare Radstellungen beziehungsweise günstige Fahreigenschaften des Kraftfahrzeuges ermöglicht.

Diese Aufgabe wird erfindungsgemäß mit den Merkmalen des Patentanspruches 1 gelöst. Vorteilhafte Weiterbildungen der Erfindung sind den Unteransprüchen angeführt.

Gemäß dem kennzeichnenden Teil des Patentanspruches 1 ist der Radträger, insbesondere sein Führungsteil, mittel- oder unmittelbar auf einer aufbaufesten Linearführung nach Art einer Kulissenführung nur in vertikaler Richtung zwangsgeführt. Die erfindungsgemäße Linearführungseinheit kann gleichzeitig Feder und Dämpfer beinhalten und das Rad an einer Drehung um die Hochachse beim Auftreten von Längskräften, respektive Kraftkomponenten, die eine Drehung hervorrufen würden, hindern. Auf den Einsatz von Lenker oder Spurstange kann somit verzichtet werden, wodurch ein Packagevorteil entsteht.

Erfindungsgemäß ergibt sich somit die elastokinematische Bewegung des Fahrzeugrads durch eine Kombination der vom Stellglied eingeleiteten Schwenkbewegung des radseitigen Trägerteils des Radträgers und der überlagerte Linearbewegung entlang der aufbaufesten Linearführung. Somit kann unter Weglassung aufwendiger Quer-/Längslenkerkonstruktionen ein angestrebtes Eigenlenkverhalten des Fahrzeugrads erreicht werden.

Der Radträger kann zusätzlich eine Vorrichtung zur Spur-/Sturzverstellung des Hinterrads aufweisen. Hierzu kann der Radträger unterteilt sein in ein das Rad aufnehmendes Trägerteil, ein mit den Radführungselementen verbundenes Führungsteil und in zwei dazwischen angeordnete und zueinander, sowie zum Trägerteil und zum Führungsteil um eine gemeinsame Drehachse verdrehbare Stellzylinder, die mit einander zugewandten, um einen definierten Winkel zur Drehachse geneigten Schrägflächen zusammenwirken. Die Stellzylinder können jeweils über einen Elektromotor und einen Stelltrieb in beiden Drehrichtungen verstellbar sein. Ferner kann die Tragfeder zwischen dem Aufbau und dem Führungsteil des Radträgers abgestützt sein. Die vorgeschlagene Kombination ermöglicht eine Radaufhängung ohne komplizierte und räumlich schwierig anzuordnende Lenker und aufwendig abzustimmende Lenkerlager und stellt dennoch gezielte Fahreigenschaften über den eine gezielte Spur- und Sturzeinstellung des Rades ermöglichenden, unterteilten Radträger sicher.

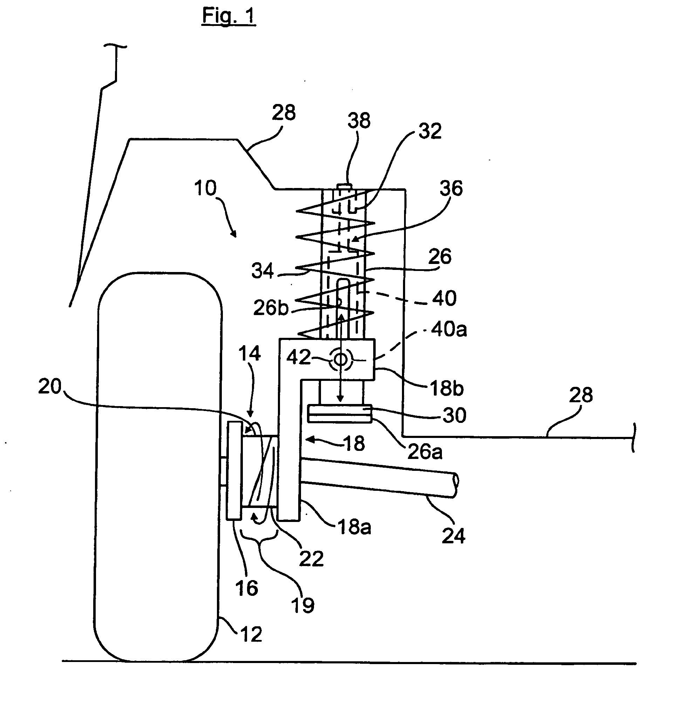

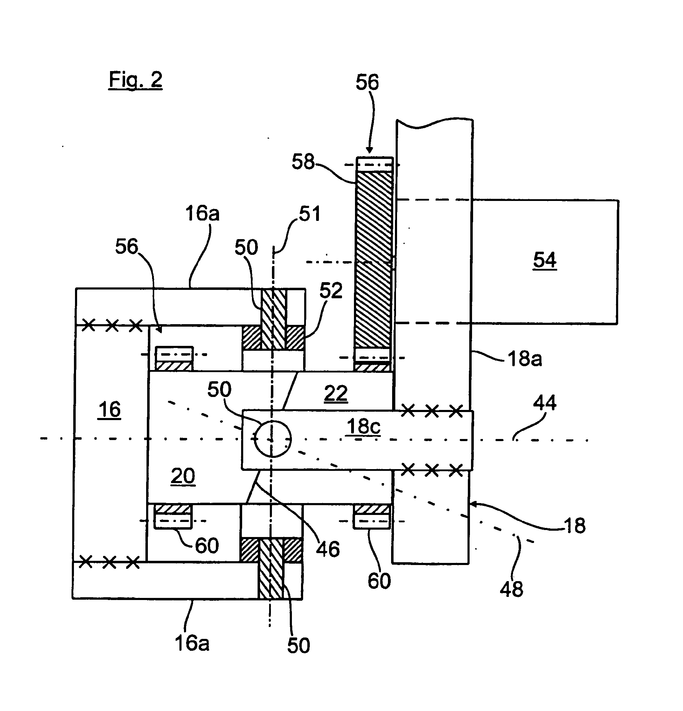

Gewollte Lenkbewegungen (Spur und/oder Sturz) können somit dem Rad durch eine Steuerung/Regelung vorgegeben und auch aufgezwungen werden. Herangezogen werden sämtliche relevante Regelparameter wie beispielsweise Federweg, Lenkwinkel an der Vorderachse, Momentangeschwindigkeiten, Momentanbeschleunigung und so weiter. Die räumliche Schwenkung des Rades ermöglicht ein geteilter Radträger. Durch Anwendung dieser Bauart ergeben sich enorme Gewichts-, Kosten- und Packagevorteile. Das Prinzip eignet sich sowohl für geschleppte als auch für angetriebene Achsen. Die technische Umsetzung ist den Fig. 1 und 2 zu entnehmen. Als Beispiel dargestellt ist eine angetriebene Achse, also inklusiv Gelenkwelle.

In vorteilhafter Weiterbildung der Erfindung kann die Linearführung zumindest eine aufbaufeste, nach unten abragende Säule aufweisen, auf der zumindest ein büchsenförmiger Abschnitt des Führungsteils in vertikaler Richtung verschiebbar geführt ist. Es können beispielsweise zwei einander benachbarte, achsparallele Säulen vorgesehen sein, die eine vertikale Führung bei stabiler Quersteifigkeit, Biegesteifigkeit und Torsionssteifigkeit sicherstellen.

In baulich besonders einfacher Ausführung kann jedoch nur eine aufbaufeste Säule vorgesehen sein, auf der ein büchsenförmiger Abschnitt des Führungsteiles in vertikaler Richtung verschiebbar, in Umfangsrichtung jedoch formschlüssig geführt ist. Die Säule und der büchsenförmige Abschnitt können mit ihren korrespondierenden Gleitflächen polygonförmig gestaltet sein, um eine zuverlässige und bei Umfangskräften verklemmungsfreie Führung sicherzustellen.

Dazu kann des Weiteren die Tragfeder um die Linearführung beziehungsweise die Säule herum angeordnet sein, wodurch auch eine verspannungsfreie Abstützung der Tragfeder, insbesondere einer Schraubendruckfeder, erzielt ist.

Ferner kann bei einer angetriebenen Hinterachse des Kraftfahrzeuges der etwa horizontal abragende, büchsenförmige Abschnitt des Führungsteiles soweit oberhalb eines den einen Stellzylinder tragenden, vertikalen Abschnittes angeordnet sein, dass unterhalb der Linearführung eine das Rad der Radaufhängung antreibende Gelenkwelle über den konstruktiv vorgegebenen Einfederweg des Radträgers mit ausreichendem Freiraum durch den Stellzylinder hindurchführbar ist.

In vorteilhafter, weiterer Ausgestaltung der Erfindung kann der Teleskop-Stoßdämpfer ebenfalls zwischen den Aufbau und das Führungsteil eingeschaltet sein und damit mit einer 1 : 1 Übersetzung in der Radaufhängung wirken.

Der Stoßdämpfer kann dabei parallel neben der Tragfeder angeordnet sein. Bevorzugt wird jedoch vorgeschlagen, dass der Stoßdämpfer räumliche besonders günstig unmittelbar in die Linearführung beziehungsweise in die rohrförmig ausgeführte Säule integriert und trieblich mit dem büchsenförmigen Abschnitt des Führungsteiles gekoppelt ist.

Schließlich kann die Säule der Linearführung an ihrem unteren Ende einen Ringbund aufweisen, der unter Zwischenschaltung eines gummielastischen Puffers als unterer Anschlag für den buchsenförmigen Abschnitt des Führungsteiles und dementsprechend als Ausfederanschlag für den Radträger dient.

Ein Ausführungsbeispiel der Erfindung ist im Folgenden mit weiteren Einzelheiten näher erläutert. Die schematische Zeichnung zeigt in:
- Fig. 1: eine Rückansicht einer hinteren Radaufhängung für Kraftfahrzeuge mit einem mehrteiligen Radträger, der auf einer nach unten abragenden Säule als Linearführung verschiebbar gelagert ist; und
- Fig. 2: in grob schematischer Darstellung den mehrteiligen Radträger, dessen Stellzylinder über Stelltriebe und Elektromotoren zur veränderlichen Einstellung von Spur und Sturz verstellbar sind.

In der Fig. 1 ist mit 10 eine Radaufhängung für Kraftfahrzeuge bezeichnet, dessen hinteres Rad 12 drehbar an einem Radträger 14 gelagert ist.

Der mehrteilige Radträger 14 setzt sich aus einem das Rad 12 aufnehmenden Trägerteil 16, einem aufhängungsseitigen Führungsteil 18 und einem dazwischengeschalteten Stellglied 19 zusammen, das zwei zueinander verdrehbare Drehteile beziehungsweise Stellzylinder 20, 22 aufweist.

Das Führungsteil 18 weist einen etwa vertikal verlaufenden Abschnitt 18a auf, durch den hindurch eine das Rad 12 antreibende, nur teilweise dargestellte Gelenkwelle 24 verläuft.

Von dem vertikalen Abschnitt 18a des Führungsteiles 18 ragt etwa horizontal und der Fahrzeuglängsmittelebene zu ein büchsenförmiger Abschnitt 18b ab, der auf einer rohrförmigen Säule 26 als Linearführung verschiebbar geführt ist.

Die Säule 26 ist am tragenden Aufbau 28 des Kraftfahrzeuges befestigt und weist an ihrem unteren Ende einen durchmessergrößeren Ringbund 26a auf, der unter Zwischenschaltung eines Dämpfungsringes 30 als unterer Ausfederanschlag für das Führungsteil 18 beziehungsweise den Radträger 14 dient.

Der etwa horizontal abragende, büchsenförmige Abschnitt 18b des Führungsteiles 18 ist wie ersichtlich soweit oberhalb des den einen Stellzylinder 22 tragenden, vertikalen Abschnittes 18a angeordnet, dass unterhalb der Linearführung beziehungsweise der Säule 26 die das Rad 12 der Radaufhängung 10 antreibende Gelenkwelle 24 bei einem stets ausreichenden Freigang durch den Abschnitt 18a und die Stellzylinder 22, 20 hindurchführbar ist.

Die Säule 26 ist im Querschnitt gesehen polygonförmig, bevorzugt als Außensechskant ausgeführt, das im Zusammenwirken mit der innensechskantförmigen Gleitführung in dem büchsenförmigen Abschnitt 18b eine in Umfangsrichtung formschlüssige Verbindung herstellt.

Alternativ zur Ausführung der Säule 26 als ein Außensechskant kann die Säule 26 auch ein Vierkantprofil aufweisen, wodurch das Drehmoment noch besser abgestützt werden kann. Alternativ kann die Säule auch ein Zylinderprofil aufweisen, in diesem Fall ist der Längsschlitz 26b der Säule 26 sowie durch den Längsschlitz 26b geführte Schraube so ausgebildet, dass diese eine Verdrehsicherung bilden.

Zwischen dem Aufbau 28 und dem büchsenförmigen Abschnitt 18b des Führungsteiles 18 ist eine Schraubendruckfeder als Tragfeder 34 abgestützt, die sich wie ersichtlich um die Säule 26 herum erstreckt und die somit ohne Biegemomente und Verspannungen die auftretenden statischen und dynamischen Radlasten aufnimmt.

Innerhalb der Säule 26 als Linearführung für den Radträger 14 ist ein Teleskop-Stoßdämpfer 36 angeordnet, der mit seiner Kolbenstange 38 an dem Aufbau 28 mittels einer nicht näher dargestellten Schraubverbindung befestigt ist, während dessen Zylinderrohr 40 mit dem büchsenförmigen Abschnitt 18b des Führungsteiles 18 fest verbunden ist.

Dazu ist in der Säule 26 ein Längsschlitz 26b vorgesehen, durch den hindurch ein Lagerauge 40a des Zylinderrohres 40 des Stoßdämpfers 36 mittels einer Schraube 42 und einer in dem Längsschlitz 26b gleitenden Abstandshülse (nicht ersichtlich) fest mit dem büchsenförmigen Abschnitt 18b des Führungsteiles 18 verbunden ist.

Um die Kolbenstange 38 des Stoßdämpfers 36 ist ferner ein mit dem Zylinderrohr 40 zusammenwirkender, als Einfederanschlag dienender Anschlagpuffer 32 eingesetzt.

Die Fig. 2 zeigt den Aufbau und die Funktion des mehrteiligen Radträgers 14, mittels dem die Spur und/oder der Sturz des Rades 12 veränderlich einstellbar und somit der Linearführung 26 als in sich starre Radführung überlagerbar ist.

Dabei ist der eine Stellzylinder 20 in der eingezeichneten Raddrehachse 44 an dem Trägerteil 16 verdrehbar gelagert, während der andere, axial benachbarte Stellzylinder 22 am nur teilweise dargestellten Führungssteil 18 beziehungsweise an dessen vertikalen Abschnitt 18a drehbar gelagert ist.

Ferner weisen die beiden Stellzylinder 20, 22 einheitlich mit 46 bezeichnete, aneinander anliegende Schrägflächen auf und sind über eine senkrecht dazu verlaufende Drehachse 48 miteinander verbunden. Eine Verdrehung der Stellzylinder 20, 22 gleichsinnig und/oder relativ zueinander in der einen oder anderen Drehrichtung bewirkt ein Verkippen oder Taumeln des radträgerseitigen Stellzylinders 20 mit dem Trägerteil 16 beziehungsweise mit dem Rad 12, wodurch gezielt die Spur und/oder der Sturz des Rades 12 veränderbar ist. Zur Momentenabstützung des Trägerteiles 16 zum Führungsteil 18 sind an dem Trägerteil 16 und an dem Führungsteil 18 zwei achsparallel abragende, diametral zueinander versetzte Ausleger 16a, 18c vorgesehen, an denen über Lagerbolzen 50 ein Stützring 52 kardanisch angelenkt ist. Die Lagerbolzen 50 liegen dabei mit ihrer Mittellinie 51 jeweils in einer Rotationsebene mit dem Schnittpunkt der Raddrehachse 44 mit der senkrecht durch die Schrägflächen 46 verlaufenden Drehachse 48.

Die Verdrehung der Stellzylinder 20, 22 ist jeweils gesteuert mittels eines Elektromotors 54, der an dem Trägerteil 16 und an dem Führungsteil 18 befestigt ist und der jeweils über einen Stelltrieb 56 mit einem Antriebsritzel 58 auf ein Stirnzahnrad 60 an den Stellzylindern 20, 22 wirkt. In der gezeichneten Darstellung gemäß Fig. 2 ist nur der Elektromotor 54 mit dem Antriebsritzel 58 an dem Führungsteil 18 ersichtlich; die Anordnung des Elektromotors 54 mit dem Antriebsritzel 58 am Trägerteil 16 ist im Wesentlichen gleich.

Die Erfindung ist nicht auf das dargestellte Ausführungsbeispiel beschränkt. Gegebenenfalls können anstelle einer einzigen Säule 26 als Linearführung auch zwei bevorzugt in Fahrzeuglängsrichtung hintereinander angeordnete Säulen verwendet sein, die eine noch größere Abstützbasis in Umfangsrichtung beziehungsweise in der Geradführung des Rades 12 darstellen. Die Tragfeder 34 und der Teleskop-Stoßdämpfer 36 könnten auch außerhalb der Linearführung 26 angeordnet sein.

## Patentansprüche

1. Radaufhängung für Kraftfahrzeuge, mit einem Radträger (14), der ein radseitiges, ein Fahrzeugrad (12) drehbar lagerndes Trägerteil (16) und ein achsseitiges Führungsteil (18) aufweist, zwischen denen ein Stellglied (19) geschaltet ist, bei dessen Betätigung das radseitige Trägerteil (16) zur Einstellung eines Spur- und/oder Sturzwinkels um einen Schwenkwinkel gegenüber dem achsseitigen Führungsteil (18) schwenkbar ist, **dadurch gekennzeichnet, dass** der Radträger (14), insbesondere dessen Führungsteil (18), mittel- oder unmittelbar auf einer aufbaufesten Linearführung (26) nach Art einer Kulissenführung in vertikaler Richtung verschiebbar geführt ist.

2. Radaufhängung nach Anspruch 1, **dadurch gekennzeichnet, dass** im Kraftfluss zwischen dem Aufbau (28) und dem Radträger (14) eine Tragfeder (34) und ein Teleskop-Stoßdämpfer (36) vorgesehen sind.

3. Radaufhängung nach Anspruch 1 oder 2, **dadurch gekennzeichnet, dass** das Stellglied (19) ein radseitiges Drehteil (20) und ein achsseitiges Drehteil (22) aufweist, die um ihre Drehachsen zueinander verdrehbar sind, und das radseitige Drehteil (20) beim Verdrehen gegenüber dem achsseitigen Drehteil (22) auslenkbar ist.

4. Radaufhängung nach Anspruch 3, **dadurch gekennzeichnet, dass** die beiden Drehteile (20, 22) mit einander zugewandten, um einen definierten Winkel zur Drehachse (44) geneigten Schrägflächen (46) zusammenwirken, wobei insbesondere die Drehteile (20, 22) jeweils
über einen Elektromotor (54) und einen Stelltrieb (56) in beiden Drehrichtungen verstellbar sind.

5. Radaufhängung nach Anspruch 2, 3 oder 4, **dadurch gekennzeichnet, dass** die Tragfeder (34) zwischen dem Aufbau (28) und dem Führungsteil (18) abgestützt ist.

6. Radaufhängung nach einem der vorhergehenden Ansprüche, **dadurch gekennzeichnet, dass** die Linearführung zumindest eine aufbaufeste, nach unten abragende Säule (26) aufweist, auf der zumindest ein büchsenförmiger Abschnitt (18b) des Führungsteils (18) in vertikaler Richtung verschiebbar geführt ist.

7. Radaufhängung nach Anspruch 6, **dadurch gekennzeichnet, dass** der büchsenförmige Abschnitt (18b) des Führungsteiles (18) in vertikaler Richtung in Umfangsrichtung formschlüssig auf der aufbaufesten Säule (26) geführt ist.

8. Radaufhängung nach einem der Ansprüche 2 bis 7, **dadurch gekennzeichnet, dass** die Tragfeder (34) um die Linearführung beziehungsweise die Säule (26) herum angeordnet ist.

9. Radaufhängung nach einem der vorhergehenden Ansprüche, **dadurch gekennzeichnet, dass** der etwa horizontal abragende, büchsenförmige Abschnitt (18b) des Führungsteiles (18) soweit oberhalb eines den einen Stellzylinder (22) tragenden, vertikalen Abschnittes (18a) angeordnet ist, dass unterhalb der Linearführung (26) eine das Rad (12) der Radaufhängung (10) antreibende Gelenkwelle (24) durch die Stellzylinder (20, 22) hindurchführbar ist.

10. Radaufhängung nach einem der Ansprüche 2 bis 9, **dadurch gekennzeichnet, dass** der Teleskop-Stoßdämpfer (36) ebenfalls zwischen den Aufbau (28) und das Führungsteil (18) eingeschaltet ist.

11. Radaufhängung nach einem der Ansprüche 2 bis 10, **dadurch gekennzeichnet, dass** der Stoßdämpfer (36) unmittelbar in die Linearführung beziehungsweise in die rohrförmig ausgeführte Säule (26) integriert und/oder trieblich mit dem büchsenförmigen Abschnitt (18b) des Führungsteiles (18) gekoppelt ist.

12. Radaufhängung nach einem der Ansprüche 6 bis 11, **dadurch gekennzeichnet, dass** die Säule (26) der Linearführung an ihrem unteren Ende einen Ringbund (26a) aufweist, der unter Zwischenschaltung eines gummielastischen Puffers (30) als unterer Anschlag für den büchsenförmigen Abschnitt (18b) des Führungsteiles (18) dient.

## Claims

1. Wheel suspension for motor vehicles, comprising a wheel carrier (14) having a wheel-side carrier part (16), which rotatably supports a vehicle wheel (12), and an axle-side guide part (18), between which carrier and guide parts an actuator (19) is connected, upon the actuation of which the wheel-side carrier part (16) can be pivoted about a pivot angle with respect to the axle-side guide part (18) for adjusting a trail angle and/or camber angle, **characterised in that** the wheel carrier (14), in particular the guide part (18) thereof, is displaceably guided in a vertical direction in the manner of a sliding block guide indirectly or directly on a linear guide (26) which is affixed to the bodywork.

2. Wheel suspension according to claim 1, **characterised in that** a bearing spring (34) and a telescopic shock absorber (36) are provided in the power flow between the bodywork (28) and the wheel carrier (14).

3. Wheel suspension according to either claim 1 or claim 2, **characterised in that** the actuator (19) has a wheel-side rotary part (20) and an axle-side rotary part (22) which are rotatable with respect to each other about their rotational axes, and the wheel-side rotary part (20) can be deflected with respect to the axle-side rotary part (22) upon rotation.

4. Wheel suspension according to claim 3, **characterised in that** the two rotary parts (20, 22) cooperate with oblique surfaces (46) which face each other and are inclined by a defined angle with respect to the rotational axis (44), in particular the rotary parts (20, 22) each being adjustable in both rotational directions by an electric motor (54) and an actuator drive (56).

5. Wheel suspension according to any of claims 2, 3 or 4, **characterised in that** the bearing spring (34) is supported between the bodywork (28) and the guide part (18).

6. Wheel suspension according to any of the preceding claims, **characterised in that** the linear guide has at least one downwardly projecting column (26) which is affixed to the bodywork and on which at least one bushing-shaped portion (18b) of the guide part (18) is displaceably guided in a vertical direction.

7. Wheel suspension according to claim 6, **characterised in** the bushing-shaped portion (18b) of the guide part (18) is guided in a vertical direction in a circumferential direction in an interlocking manner on the column (26) affixed to the bodywork.

8. Wheel suspension according to any of claims 2 to 7, **characterised in that** the bearing spring (34) is arranged around the linear guide and/or the column (26).

9. Wheel suspension according to any of the preceding claims, **characterised in that** the approximately horizontally projecting, bushing-shaped portion (18b) of the guide part (18) is arranged far enough above a vertical portion (18a) carrying one actuating cylinder (22) so as to allow, below the linear guide (26), a cardan shaft (24) driving the wheel (12) of the wheel suspension (10) to be guided through the actuating cylinders (20, 22).

10. Wheel suspension according to any of claims 2 to 9, **characterised in that** the telescopic shock absorber (36) is likewise coupled between the bodywork (28) and the guide part (18).

11. Wheel suspension according to any of claims 2 to 10, **characterised in that** the shock absorber (36) is directly integrated in the linear guide and/or in the tubular column (26) and/or is drivably connected to the bushing-shaped portion (18b) of the guide part (18).

12. Wheel suspension according to any of claims 6 to 11, **characterised in that** the column (26) of the linear guide has, at the lower end thereof, a ring shoulder (26a) which is used as a lower stop for the bushing-shaped portion (18b) of the guide part (18) when interconnecting a rubber-elastic buffer (30).

## Revendications

1. Suspension de roue pour véhicules automobiles, comprenant un support de roue (14), qui présente une partie de support (16) montant à rotation côté roue une roue de véhicule (12) et une partie de guidage côté essieu (18), entre lesquelles parties est couplé un composant de réglage (19) dont la commande permet de faire pivoter la partie de support côté roue (16) d'un angle de pivotement par rapport à la partie de guidage côté essieu (18) pour régler un angle de pincement et/ou de carrossage, **caractérisée en ce que** le support de roue (14), en particulier sa partie de guidage (18), est guidé(e) à coulissement indirectement ou directement sur une coulisse linéaire (26) fixée sur la structure selon un type de guidage de coulisse dans la direction verticale.

2. Suspension de roue selon la revendication 1, **caractérisée en ce qu'**un ressort de suspension (34) et un amortisseur de chocs télescopique (36) sont prévus entre la structure (28) et le support de roue (14).

3. Suspension de roue selon la revendication 1 ou la revendication 2, **caractérisée en ce que** le composant de réglage (19) présente une partie rotative côté roue (20) et une partie rotative côté essieu (22), qui peuvent tourner l'une par rapport à l'autre, et la partie rotative côté roue (20) peut dévier lors de la torsion par rapport à la partie rotative côté essieu (22).

4. Suspension de roue selon la revendication 3, **caractérisée en ce que** les deux parties rotatives (20, 22) coopèrent avec des surfaces obliques (46) tournées l'une vers l'autre et inclinées d'un angle défini par rapport à l'essieu rotatif (44), dans laquelle, en particulier, les parties rotatives (20, 22) peuvent être réglées respectivement via un moteur électrique (54) et un mécanisme de réglage (56) dans les deux sens de rotation.

5. Suspension de roue selon la revendication 2, 3 ou 4, **caractérisée en ce que** le ressort de suspension (34) est supporté entre la structure (28) et le partie de guidage (18).

6. Suspension de roue selon l'une quelconque des revendications précédentes, **caractérisée en ce que** le coulisse linéaire présente au moins une colonne (26) fixée à la structure et s'étendant vers le bas, sur laquelle colonne au moins une section (18b) en forme de douille de la partie de guidage (18) est guidée de manière à pouvoir coulisser dans la direction verticale.

7. Suspension de roue selon la revendication 6, **caractérisée en ce que** la section (18b) en forme de douille de la partie de guidage (18) est guidée dans la direction verticale avec adaptation de formes dans la direction périphérique sur la colonne (26) fixée à la structure.

8. Suspension de roue selon l'une quelconque des revendications 2 à 7, **caractérisée en ce que** le ressort de suspension (34) est aménagé autour de la coulisse linéaire ou de la colonne (26).

9. Suspension de roue selon l'une quelconque des revendications précédentes, caractérisée ce que la section (18b) en forme de douille de la partie de guidage (18) s'étendant à peu près horizontalement est aménagée au-dessus d'une section verticale (18a) portant un cylindre de réglage (22) de sorte que, en dessous de la coulisse linéaire (26), un arbre de transmission (24) entraînant la roue (12) de la suspension de roue (10) puisse être enfilée à travers le cylindre de réglage (20, 22).

10. Suspension de roue selon l'une quelconque des revendications 2 à 9, **caractérisée en ce que** l'amortisseur de chocs télescopique (36) est couplé également entre la structure (28) et la partie de guidage (18).

11. Suspension de roue selon l'une quelconque des revendications 2 à 10, **caractérisée en ce que** l'amortisseur de chocs (36) est intégré directement à la coulisse linéaire ou à la colonne (26) de forme tubulaire et/ou est couplé en mode opératoire à la section (18b) en forme de douille de la partie de guidage (18).

12. Suspension de roue selon l'une quelconque des revendications 6 à 11, **caractérisée en ce que** la colonne (26) de la coulisse linéaire présente à son extrémité inférieure un épaulement annulaire (26a), qui sert, par l'intermédiaire d'un tampon élastique (30) de type gomme, comme butée inférieure pour la section (18b) en forme de douille de la partie de guidage (18).
